# EUROPEAN PATENT SPECIFICATION

(11) **EP 4 655 622 B1**
(45) Date of publication and mention of the grant of the patent: **25.11.2026**
(21) Application number: 24702123.1
(22) Date of filing: 25.01.2024
(51) Int. Cl.: G02B 1/00, G02B 13/00

(54) **APPARATUS INCLUDING A LENS CONFIGURATION HAVING STACKED METASURFACES, AND METHODS FOR FABRICATING THE SAME**
VORRICHTUNG MIT EINER LINSENKONFIGURATION MIT GESTAPELTEN METAOBERFLÄCHEN UND VERFAHREN ZUR HERSTELLUNG DAVON
APPAREIL COMPRENANT UNE CONFIGURATION DE LENTILLE AYANT DES MÉTASURFACES EMPILÉES, ET PROCÉDÉS DE FABRICATION DE CELUI-CI

(30) Priority: 25.01.2023 US 202363481480 P
(43) Date of publication of application: 03.12.2025
(73) Proprietor: Nil Technology ApS, 2800 Kongens Lyngby (DK)
(72) Inventor: VESTERGAARD, Thorlak, 2800 Kongens Lyngby (DK); NIELSEN, Theodor, 2800 Kongens Lyngby (DK); QUAADE, Ulrich, 2800 Kongens Lyngby (DK)
(74) Representative: Fish & Richardson P.C.
(86) International application number: PCT/EP2024/051750
(87) International publication number: WO 2024/156795

(56) References cited:
- WO-A1-2022/117458
- US-A1- 2019 064 532
- US-A1- 2019 086 579
- US-A1- 2022 336 270

## Description

### FIELD OF THE DISCLOSURE

The present disclosure relates to lens configurations having stacked metasurfaces.

### BACKGROUND

Meta-optical elements (MOEs) are examples of optical elements that employ a flat optic technology. An MOE has a metasurface that includes distributed small subwavelength structures (e.g., nanostructures or other meta-atoms) arranged to interact with light in a particular manner. The meta-atoms can, individually and/or collectively, interact with light waves to change a local amplitude, a local phase, or both, of an incoming light wave. MOEs can be used, for example, in optical applications to take advantage of the internal properties given by a tailored phase function, compared to classic, curved refractive lenses.
WO 2022/117458 A1 describes an optical element that includes an optical metasurface including meta-atoms, wherein each of the meta-atoms is cone-shaped or has a truncated cone shape.
US 2019/064532 A1 describes optical arrangements of metasurface elements, integrated systems incorporating light sources and/or detectors with such metasurface elements, and methods of the manufacture of such optical arrangements and integrated systems.
US 2022/336270 A1 describes optical devices that include optical element layers, and methods of forming the optical devices.
US 2019/086579 A1 describes a meta-surface optical device that includes a meta-surface arranged on a region of a substrate and a light control member arranged around the metasurface.

### SUMMARY

The present disclosure describes apparatus that include a lens configuration having stacked metasurfaces, as well as methods for fabricating the lens configuration.

The invention is defined in the appended claims. The present disclosure describes an apparatus that includes a lens arrangement. The lens arrangement includes a first substrate having a first metasurface thereon, and a second substrate having a second metasurface thereon. The first and second metasurfaces are stacked and face one another, the first and second metasurfaces being separated from one another by an adhesive that attaches the first and second substrates to one another.

Some implementations include one or more of the following features. For example, in some instances, the first and second substrates are composed of a glass material, and the adhesive is a polymer glue. In some implementations, the first and second substrates are composed of a borosilicate glass. In some implementations, the adhesive is optically clear at an infra-red operating wavelength.

In some implementations, the first metasurface faces the second metasurface, with only the adhesive between them, wherein there is no air gap present between the first and second metasurfaces. In some implementations, a total combined thickness of the lens arrangement including the first and second substrates, the first and second metasurfaces and the adhesive, is 100 microns (µm) or less. In some implementations, a total combined thickness of the lens arrangement including the first and second substrates, the first and second metasurfaces and the adhesive, is 10 microns or less. In some implementations, a total combined thickness of the lens arrangement including the first and second substrates, the first and second metasurfaces and the adhesive, is 1 micron or less.

In some application the lens arrangement further includes an aperture, which, in some cases, is composed of a layer of black chrome or structured resist applied to one of the metasurfaces or one of the substrates.

**In** some implementations, the lens arrangement further includes a third substrate having a third metasurface thereon, the third substrate being attached by additional adhesive to the second substrate. **In** some cases, the third metasurface faces the second substrate the third metasurface faces the second substrate, with only the additional adhesive between them.

The present disclosure also describes a method that includes applying adhesive over a surface of a first substrate having a metasuface thereon. The first substrate is attached to a second substrate having a second metasurface thereon such that the first and second metasurfaces are stacked and face one another, the first and second substrates being attached to one another by the adhesive, and the first and second metasurfaces being separated from one another by the adhesive.

Some implementations include one or more of the following features. For example, in some instances, the first and second substrates are composed of a glass material, and the adhesive is a polymer glue, wherein, after attaching the first and second substrates to one another, the first metasurface faces the second metasurface, with only the adhesive between them, and wherein there is no air gap present between the first and second metasurfaces.

In some implementations, the method includes thinning at least one of the first or second substrates. The thinning can include, for example, etching, grinding and/or polishing. According to the claimed invention, the method includes thinning at least one of the first or second substrates until a total combined thickness of the first and second substrates, the first and second metasurfaces and the adhesive, is 10 microns or less.

In some implementations, the lateral alignment accuracy between the first and the second metasurfaces is better than 50 µm, 20 µm, 10 µm, or even 5 µm. In some implementations, the lateral alignment accuracy between the first and the second metasurface is better than 1 µm.

In some implementations, the method includes attaching a third substrate to the second substrate by additional adhesive, the third substrate having a third metasurface thereon, wherein the first, second and third metasurfaces are stacked one over the other. In some instances, the third substrate is attached to the second substrate such that the third metasurface faces the second substrate, with only the additional adhesive between them.

In some implementations, the method includes removing completely at least one of the first or second substrates. In some implementations, the method includes attaching a third substrate to the second metasurface by additional adhesive, the third substrate having a third metasurface thereon, wherein the first, second and third metasurfaces are stacked one over the other. In some instances, the third substrate is attached to the second substrate such that the third metasurface faces the second metasurface, with only the additional adhesive between them.

Some implementations include one or more of the following advantages. For example, in some implementations, a lens configuration in which two or more metasurfaces are stacked can achieve a relatively short total track length (TTL), low f-number, and/or improved overall imaging performance. In some cases, a first optical functionality can be implemented on one metasurface and another, different optical function can be implemented on the second metasurface. In some cases, the stacked metasurfaces can facilitate a wide range of optical functionalities by having a resonant interaction between the stacked metasurfaces. The stacked metasurfaces can, in some cases, facilitate integration of an image sensor or light source with the stack of metasurfaces, which may permit the sensor or light source to be positioned in relatively close proximity to the stack of metasurfaces. Such arrangements can, in some cases, achieve a highly compact (e.g., thin) optical device.

Other aspects, features and advantages will be readily apparent from the following detailed description, the accompanying drawings, and the claims.

### BRIEF DESCRIPTION OF THE DRAWINGS

FIG. 1 illustrates an example of a lens configuration including stacked metasurfaces.
FIGS. 2A, 2B, 2C, 2D, 2E, 2F illustrate various stages in a method of fabricating a lens configuration.
FIGS. 3A-3C illustrate various stages in a method of fabricating a lens configuration having more than two stacked metasurfaces.
FIGS. 4 and 5 illustrate examples of lens configurations having stacked metasurfaces and an optical aperture.
FIGS. 6A, 6B, 6C, 6D, 6E, 6F illustrate various stages in a method of fabricating a lens configuration.
FIG. 7 illustrates an example of an image sensor module including a lens configuration having stacked metasurfaces.
FIG. 8 illustrates an example of a light source module including a lens configuration having stacked metasurfaces.

### DETAILED DESCRIPTION

The present disclosure describes apparatus that include a lens configuration having stacked metasurfaces, as well as methods for fabricating such a lens configuration. In some implementations, lens configurations in which two or more metasurfaces are stacked can achieve a relatively short total track length (TTL), low f-number, and/or improved overall imaging performance.

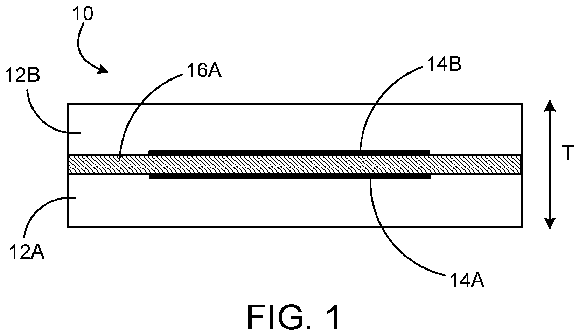

As shown in the example of FIG. 1, a lens arrangement 10 includes first and second substrates 12A, 12B attached (e.g., bonded) to one another. Each substrate 12A, 12B has a respective metasurface 14A, 14B on one side. Each metasurface 14A, 14B has carefully arranged "unit cells" or "meta-atoms" with sub-wavelength structures (e.g., nanostructures). The term "subwavelength" indicates that the nanostructures have at least one lateral dimension (parallel to the substrate on which they are disposed) that is less than a wavelength of light that is to be incident thereon. The meta-atoms can be composed, for example, of silicon. In general, the dimensions of the nanostructures scale with the shortest wavelength of interest. For example, in some implementations, the nanostructures can be in the form of nanoscale features having dimensions less than 1 micron. By adjusting the geometry of these unit cell elements, one can modify the phase above the elements in response to a plane wave. With the knowledge of the phase in terms of the geometry parameters, it is possible to create a metalens with an arbitrary phase profile by placing the meta-atoms at the necessary positions. In general, the derivative of the phase profile determines the ray bending. Each substrate together with its respective metasurface forms a metalens.

The substrates 12A, 12B, which may be composed, for example, of glass (e.g., borosilicate glass such as D 263^{®} glass manufactured by Schott), can be attached (e.g., bonded) to one another by an adhesive 16A, such as a polymer glue, that is optically clear at the operating wavelength (e.g., infrared or visible). In some implementations, the adhesive is index matched to the glass substrates 12A, 12B. The substrates are attached to one another such that the metasurfaces 14A, 14B are adjacent one another. That is, the first metasurface 14A faces the second metasurface 14B, with only a thin layer of the adhesive 16A between them. In the illustrated example, there is no air gap present between the metasurfaces 14A, 14B. In some cases, the overall thickness (T) of the lens arrangement 10 is on the order of ten microns (µm), and in some cases may be even less. Incorporating a stack of metasurfaces into a lens arrangement as described in this disclosure can, in some instances, facilitate a wide range of optical functionalities by having a resonant interaction between the stacked metasurfaces. Such optical functionalities can include, for example, near-field interactions, filtering functions, and/or plasmonics.

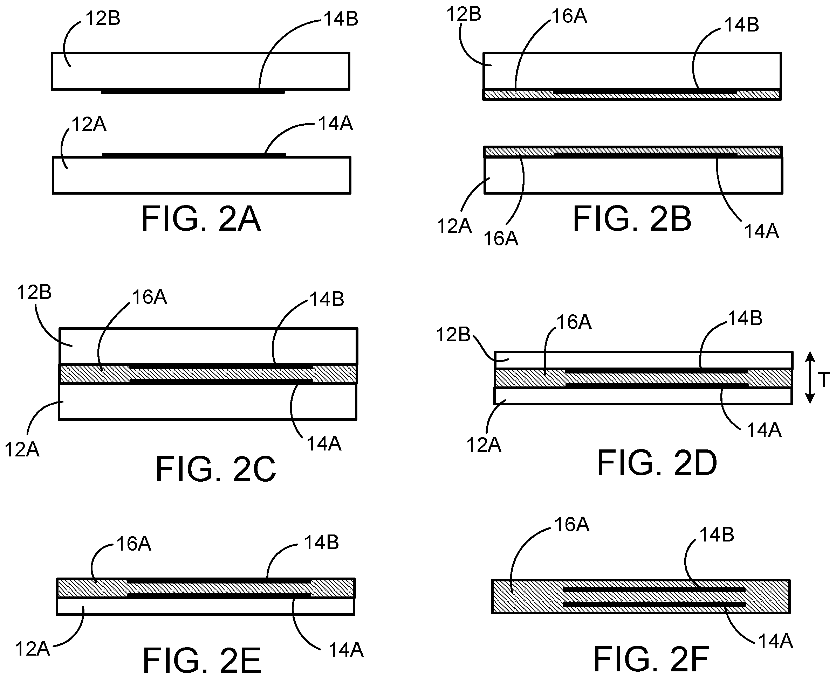

FIGS. 2A, 2B, 2C, 2D, 2E, 2F illustrate various stages in a method of fabricating the device of FIG. 1. The method can be performed, in some cases, at the wafer-level. As shown in FIG. 2A, first and second glass substrates 12A, 12B are provided, each of which has a respective metasurface 14A, 14B on its surface. In some instances, the initial thickness of each substrate 12A, 12B may be on the order of several hundred µm (e.g., 500 µm) to provide mechanical and structural integrity and a relatively planar surface for processing. As shown in FIG. 2B, a thin layer of an optically clear adhesive (e.g., polymer glue) 16A is provided on the side of one (or both) of the substrates 12A, 12B on which the metasurface 14A, 14B is present. The adhesive 16A can be provided, for example, by spin-coating or jetting, or in some other manner to apply a controlled amount of adhesive on the substrate surface. Then, as shown in FIG. 2C, the two substrates 12A, 12B are brought into contact with one another such that their respective metasurfaces 14A, 14B face one another. In some implementations, the adhesive 16A between the substrates 12A, 12B may be cured thermally and/or by the application of UV radiation. In some implementations, as indicated by FIG. 2D, one or both of the substrates 12A, 12B can be thined from the backside of the substrate (i.e., the side opposite the metasurface) to reduce the overall thickness of the resulting device. The thinning can be accomplished, for example, by etching techniques, including, for example, dry (e.g., reactive ion etching (RIE)) and/or wet (e.g., hydrofluoric acid) etches. Other thinning techniques include mechanical grinding and/or polishing. According to the claimed invention, the thinning is performed to reduce the overall thickness (T) of the device to 10 µm or less. If the foregoing steps are performed at a wafer-level, a dicing operation subsequently can be performed to separate the wafer into individual devices.

In some implementations, as indicated by FIGS. 2E and 2F, one or both of the substrates 12A, 12B can be completely removed by the etching or other thinning technique.

In some instances, the techniques described in this disclosure can help provide active control of the total thickness of the stack. In some cases, the techniques can improve yield and reduce manufacturing costs.

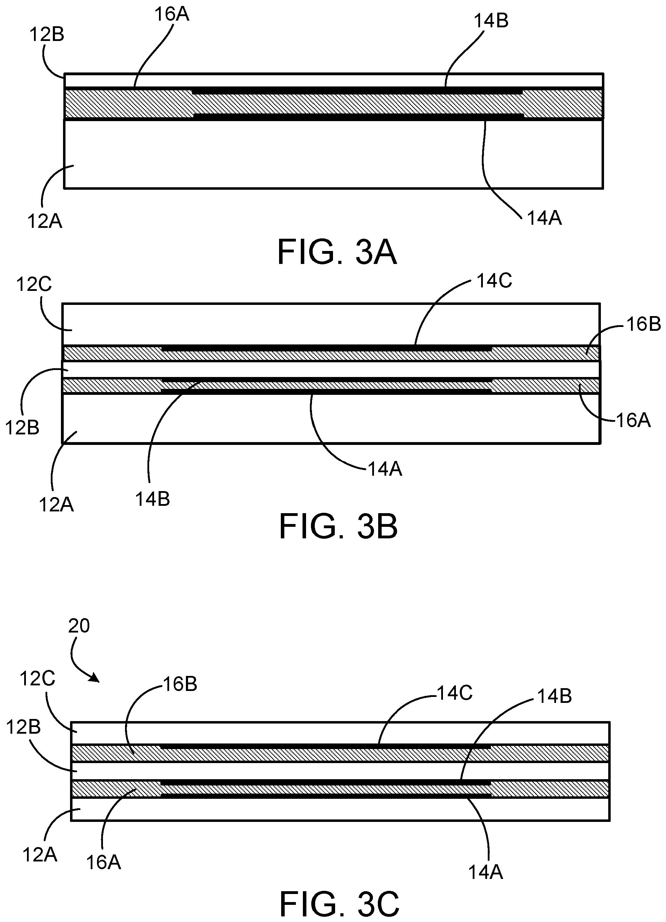

In some implementations, further processing can be performed to provide a lens configurations in which more than two metasurfaces are stacked in close proximity to one another. For example, as shown in FIG. 3A, at least one of the substrates of FIG. 2C (e.g., the second substrate 12B) can be thinned (e.g., etched) so as to leave only a thin layer of the substrate material over the metasurface 14B. If a highly selective etch is used, then the substrate 12B can be etched down to (or almost down to) the metasurface 14B. Next, as shown in FIG. 3B, a third substrate 12C, having a respective third metasurface 14C, is attached (e.g., bonded) to the second substrate by an adhesive 16B such as a polymer glue, that is optically clear at the operating wavelength (e.g., infrared or visible). In some implementations, the adhesive is index matched to the glass substrates 12B, 12C. The substrates are attached to one another such that the metasurfaces 14B, 14C are in close proximity to one another. That is, the third metasurface 14C faces the second metasurface 14B, with only a thin layer of adhesive 16B and the remaining material of the second substrate 12B (if any) between them.

In some implementations, one or both of the outer substrates (i.e., the first substrate 12A and/or the third substrate 12C) can be etched from the backside of the substrate (i.e., the side opposite the metasurface) to reduce the overall thickness of the resulting lens configuration. In some implementations, at least one of the substrates is completely removed by the etching or other thinning technique. The etching techniques may include, for example, dry (e.g., RIE) and/or wet (e.g., hydrofluoric acid) etches. FIG. 3C shows an example of a lens configuration 20 that includes three stacked metasurfaces, 14A, 14B, 14C after thinning (e.g., etching) the outer substrates 12A, 12C. In the resulting lens configuration 20, the substrates are attached (e.g., bonded) to one another such that the metasurfaces 14A, 14B, 14C form a stack and are adjacent, or in close proximity, to one another. That is, the first metasurface 14A faces the second metasurface 14B, with only a thin layer of adhesive 16A between them, and the third metasurface 14C faces the second metasurface 14B, with only a thin layer of adhesive 16B (and possibly also a thin layer of the material of the second substrate 12B) between them. In the illustrated example, there is no air gap present between the metasurfaces 14A, 14B, 14C.

In some implementations, further processing, similar to that described in connection with FIGS. 3A-3C, can be performed to provide additional metasurfaces for the stack. Providing more than two metasurfaces may be advantageous, for example, for implementations of an achromatic lens and, in general, may provide greater flexibility in the lens design.

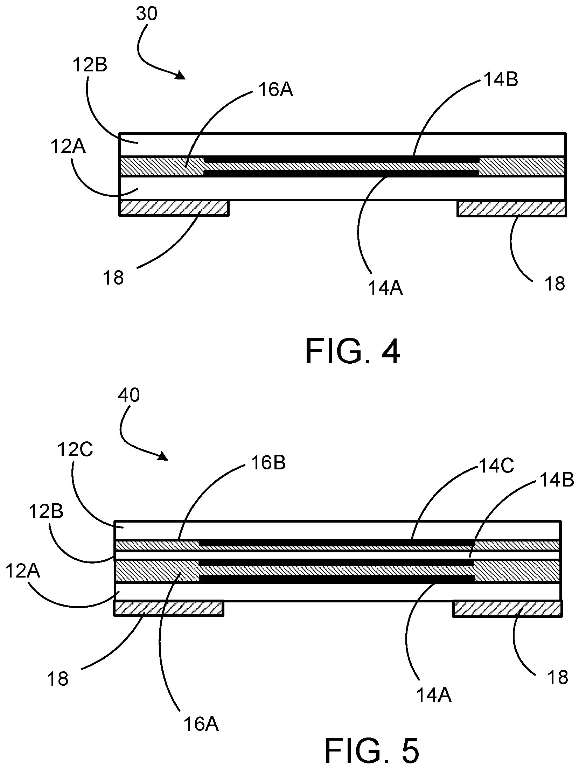

In some implementations, as shown in the examples of FIGS. 4 and 5, an optical aperture or stop 18 may be provided on an exterior surface of one of the substrates (e.g., the first substrate 12A) to form an optical device 30, 40 that includes a lens configuration having a stack of two or more metasurfaces 14A, 14B. The aperture 18 may be composed, for example, of black chrome or a structured resist, and may be helpful, in some implementations, to block unwanted (e.g., stray) light. In some instances (as shown in FIG. 4), the aperture 18 may slightly overlap the positions of the metasurfaces laterally, whereas in other instances (as shown in FIG. 5), the aperture 18 may not overlap with the positions of the metasurfaces laterally. In some implementations the aperture is applied on one of the metasurfaces.

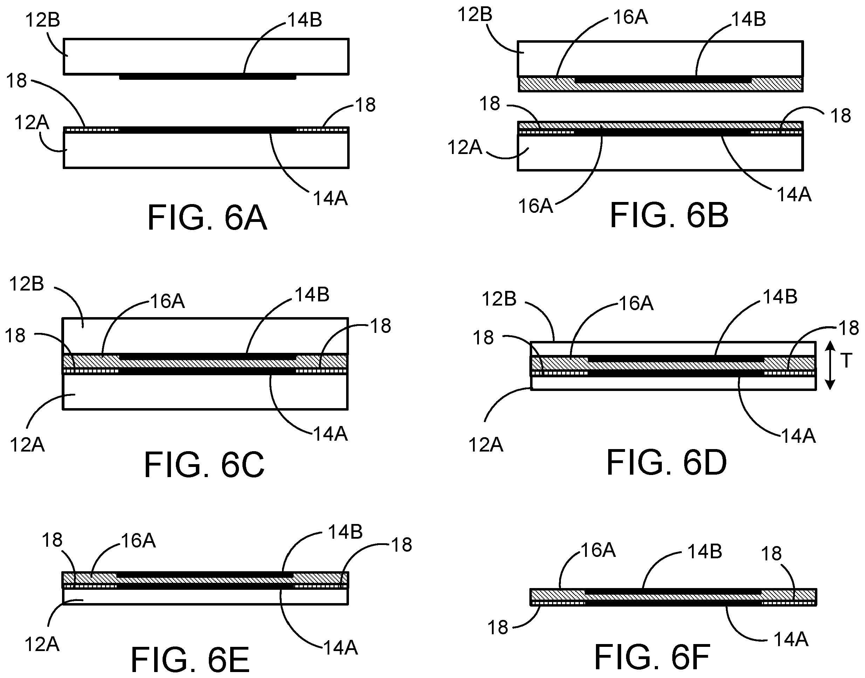

FIGS. 6A, 6B, 6C, 6D, 6E, 6F illustrate various stages in an example method of fabricating a lens configuration that includes an optical aperture. The method can be performed, in some cases, at the wafer-level. As shown in FIG. 6A, first and second glass substrates 12A, 12B are provided, each of which has a respective metasurface 14A, 14B on its surface. In some instances, the initial thickness of each substrate 12A, 12B may be on the order of several hundred µm (e.g., 500 µm) to provide mechanical and structural integrity and a relatively planar surface for processing. Further, a thin layer 18 (e.g., of black chrome or a structured resist) is applied to the surface of one of the substrates 12A so that the layer 18 laterally surrounds the edges of the metasurface 14A. As shown in FIG. 6B, a thin layer of an optically clear adhesive (e.g., polymer glue) 16A is provided on the side of one (or both) of the substrates 12A, 12B on which the metasurface 14A, 14B is present. The adhesive 16A can be provided, for example, by spin-coating or jetting, or in some other manner to apply a controlled amount of adhesive on the substrate surface. Then, as shown in FIG. 6C, the two substrates 12A, 12B are brought into contact with one another such that their respective metasurfaces 14A, 14B face one another. In some implementations, the adhesive 16A between the substrates 12A, 12B may be cured thermally and/or by the application of UV radiation. In some implementations, as indicated by FIG. 6D, one or both of the substrates 12A, 12B can be thined from the backside of the substrate (i.e., the side opposite the metasurface) to reduce the overall thickness of the resulting device. The thinning can be accomplished, for example, by etching techniques, including, for example, dry (e.g., reactive ion etching (RIE)) and/or wet (e.g., hydrofluoric acid) etches. Other thinning techniques include mechanical grinding and/or polishing. According to the claimed invention, the thinning is performed to reduce the overall thickness (T) of the device to 10 µm or less. If the foregoing steps are performed at a wafer-level, a dicing operation subsequently can be performed to separate the wafer into individual devices. In some implementations, as indicated by FIGS. 6E and 6F, one or both of the substrates 12A, 12B can be completely removed by the etching or other thinning technique. The result in each of FIGS. 6D, 6E and 6F is a lens arrangement that includes a stack of metasurfaces 14A, 14B and an optical aperture defined by the layer 18.

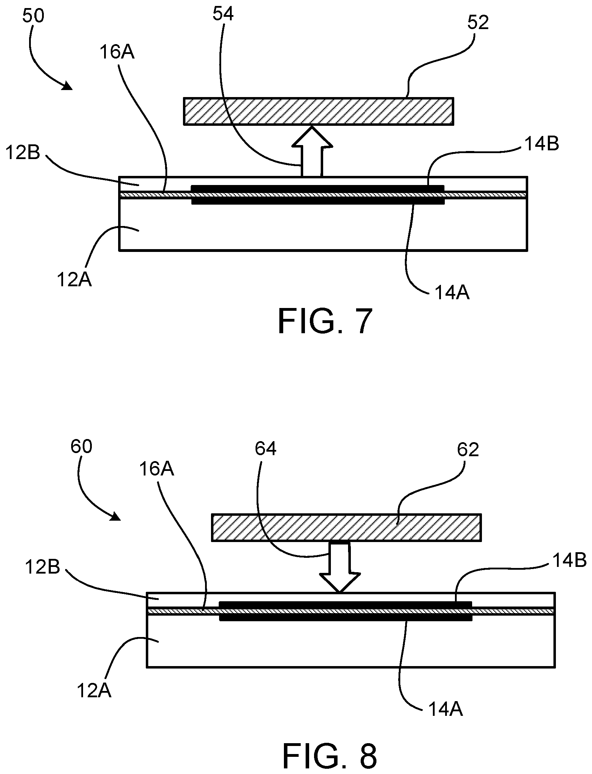

The various lens arrangements and optical devices described in this disclosure may be used in a range of applications, including optical imaging systems (e.g., cameras) and light projection systems. FIG. 7 shows an example of a lens arrangement 50 having a stack of metasurfaces 14A, 14B. An image sensor 52 is disposed along the optical axis of the stack and is positioned to receive rays of light 54 passing through the stack of metasurfaces 14A, 14B. The image sensor 52 can be, for example, a CMOS or CCS sensor. FIG. 8 shows an example of a lens arrangement 60 having a stack of metasurfaces 14A, 14B. A light source 62 is operable to emit light (e.g., infra-red or visible) 64 toward the stack such that at least some of the rays of light pass through the stack of metasurfaces 14A, 14B. In some impleentations, the lens arrangement may help collimate light from the light source 62, which can include, for example, a vertical cavity surface emitting laser (VCSEL) or light emitting diode (LED). Integrating the image sensor or light source with a stack of metasurfaces as described in this disclosure can permit the sensor or light source to be positioned in relative close proximity to the stack of metasurfaces, which in some cases can achieve a highly compact (e.g., thin) optical device.

Various modifications will be readily apparent from the foregoing detailed description. Accordingly, other implementations also are within the scope of the invention as defined by the claims.

## Claims

1. An apparatus comprising:
a lens arrangement including a first substrate (12A) having a first metasurface (14A) thereon, and a second substrate (12B) having a second metasurface (14B) thereon,
wherein the first and second metasurfaces (14A, 14B) are stacked and face one another, the first and second metasurfaces (14A, 14B) being separated from one another by an adhesive (16A) that attaches the first and second substrates (12A, 12B) to one another,
**characterised in that**
a total combined thickness of the lens arrangement including the first and second substrates (12A, 12B), the first and second metasurfaces (14A, 14B), and the adhesive (16A) is 10 microns or less.

2. The apparatus of claim 1 wherein the first and second substrates are composed of a glass material, and wherein the adhesive is a polymer glue.

3. The apparatus of any one of claims 1-2 wherein the adhesive is optically clear to infrared radiation.

4. The apparatus of any one of claims 1-3 wherein the first and second substrates are composed of a borosilicate glass.

5. The apparatus of any one of claims 1-4 wherein the first metasurface faces the second metasurface, with only the adhesive between them, and wherein there is no air gap present between the first and second metasurfaces.

6. The apparatus of any one of claims 1-5 wherein the lens arrangement further includes a third substrate (12C) having a third metasurface (14C) thereon, the third substrate (12C) being attached by additional adhesive (16B) to the second substrate.

7. The apparatus of claim 6 wherein the third metasurface faces the second substrate with only the additional adhesive between them.

8. The apparatus of any one of claims 1-7 including at least one optical aperture on one of the metasurfaces or on one of the substrates.

9. The apparatus of any one of claims 1-8 wherein lateral alignment accuracy between the first and the second metasurfaces is better than 50 µm.

10. The apparatus of any one of claims 1-8 wherein lateral alignment accuracy between the first and the second metasurfaces is better than 5 µm.

11. A method comprising:
applying adhesive (16A) over a surface of a first substrate (12A) having a first metasuface (14A) thereon;
attaching the first substrate (12A) to a second substrate (12B) having a second metasurface (14B) thereon such that the first and second metasurfaces (14A, 14B) are stacked and face one another, the first and second substrates (12A, 12B) being attached to one another by the adhesive (16A) , and the first and second metasurfaces (14A, 14B) being separated from one another by the adhesive (16A);
**characterised by**
thinning at least one of the first or second substrates (12A, 12B) until a total combined thickness of the first and second substrates (12A, 12B), the first and second metasurfaces (14A, 14B), and the adhesive (16A) is 10 microns or less.

12. The method of claim 11 wherein the first and second substrates are composed of a glass material, and the adhesive is a polymer glue, wherein, after attaching the first and second substrates to one another, the first metasurface faces the second metasurface, with only the adhesive between them, and wherein there is no air gap present between the first and second metasurfaces.

13. The method of any one of claims 11-12 further including:
removing completely at least one of the first or second substrates.

14. The method of claim 13 wherein the thinning or removing completely includes etching.

15. The method of any one of claims 11-14 further including:
attaching a third substrate (12C) to the second substrate (12B) by additional adhesive (16B), the third substrate (12C) having a third metasurface (14C) thereon, wherein the first (14A), second (14B), and third (14C) metasurfaces are stacked one over the other, optionally wherein the third substrate is attached to the second substrate such that the third metasurface faces the second substrate with only the additional adhesive between them.

## Patentansprüche

1. Vorrichtung, umfassend:
eine Linsenanordnung, die ein erstes Substrat (12A) mit einer ersten Metaoberfläche (14A) darauf und ein zweites Substrat (12B) mit einer zweiten Metaoberfläche (14B) darauf einschließt,
wobei die erste und die zweite Metaoberfläche (14A, 14B) gestapelt sind und einander zugewandt sind, wobei die erste und die zweite Metaoberfläche (14A, 14B) durch einen Klebstoff (16A) voneinander getrennt sind, der das erste und das zweite Substrat (12A, 12B) aneinander befestigt,
**dadurch gekennzeichnet, dass**
eine kombinierte Gesamtdicke der Linsenanordnung, die das erste und das zweite Substrat (12A, 12B), die erste und die zweite Metaoberfläche (14A, 14B) und den Klebstoff (16A) einschließt, 10 Mikrometer oder weniger beträgt.

2. Vorrichtung nach Anspruch 1, wobei das erste und das zweite Substrat aus einem Glasmaterial zusammengesetzt sind, und wobei der Klebstoff ein Polymerkleber ist.

3. Vorrichtung nach einem der Ansprüche 1-2, wobei der Klebstoff gegenüber Infrarotstrahlung optisch transparent ist.

4. Vorrichtung nach einem der Ansprüche 1-3, wobei das erste und das zweite Substrat aus einem Borosilikatglas zusammengesetzt sind.

5. Vorrichtung nach einem der Ansprüche 1-4, wobei die erste Metaoberfläche der zweiten Metaoberfläche zugewandt ist, wobei sich nur der Klebstoff zwischen ihnen befindet, und wobei kein Luftspalt zwischen der ersten und der zweiten Metaoberfläche vorhanden ist.

6. Vorrichtung nach einem der Ansprüche 1-5, wobei die Linsenanordnung ferner ein drittes Substrat (12C) mit einer dritten Metaoberfläche (14C) darauf einschließt, wobei das dritte Substrat (12C) durch zusätzlichen Klebstoff (16B) an dem zweiten Substrat befestigt ist.

7. Vorrichtung nach Anspruch 6, wobei die dritte Metaoberfläche dem zweiten Substrat zugewandt ist, wobei sich nur der zusätzlichen Klebstoff zwischen ihnen befindet.

8. Vorrichtung nach einem der Ansprüche 1-7, die mindestens eine optische Apertur auf einer der Metaoberflächen oder auf einem der Substrate einschließt.

9. Vorrichtung nach einem der Ansprüche 1-8, wobei die laterale Ausrichtungsgenauigkeit zwischen der ersten und der zweiten Metaoberfläche besser als 50 µm ist.

10. Vorrichtung nach einem der Ansprüche 1-8, wobei die laterale Ausrichtungsgenauigkeit zwischen der ersten und der zweiten Metaoberfläche besser als 5 µm ist.

11. Verfahren, das Folgendes umfasst:
Aufbringen von Klebstoff (16A) über eine Oberfläche eines ersten Substrats (12A) mit einer ersten Metaoberfläche (14A) darauf;
Befestigen des ersten Substrats (12A) an einem zweiten Substrat (12B) mit einer zweiten Metaoberfläche (14B) darauf, so dass die erste und die zweite Metaoberfläche (14A, 14B) gestapelt sind und einander zugewandt sind, wobei das erste und das zweite Substrat (12A, 12B) durch den Klebstoff (16A) aneinander befestigt sind und die erste und die zweite Metaoberfläche (14A, 14B) durch den Klebstoff (16A) voneinander getrennt sind;
**gekennzeichnet durch**
Ausdünnen von mindestens einem von dem ersten oder dem zweiten Substrat (12A, 12B), bis eine kombinierte Gesamtdicke des ersten und des zweiten Substrats (12A, 12B), der ersten und der zweiten Metaoberfläche (14A, 14B) und des Klebstoffs (16A) 10 Mikrometer oder weniger beträgt.

12. Verfahren nach Anspruch 11, wobei das erste und das zweite Substrat aus einem Glasmaterial zusammengesetzt sind und der Klebstoff ein Polymerkleber ist, wobei nach Befestigen des ersten und des zweiten Substrats aneinander die erste Metaoberfläche der zweiten Metaoberfläche zugewandt ist, wobei sich nur der Klebstoff zwischen ihnen befindet, und wobei kein Luftspalt zwischen der ersten und der zweiten Metaoberfläche vorhanden ist.

13. Verfahren nach einem der Ansprüche 11-12, das ferner einschließt:
vollständiges Entfernen von mindestens einem von dem ersten oder dem zweiten Substrat.

14. Verfahren nach Anspruch 13, wobei das Ausdünnen oder vollständige Entfernen Ätzen einschließt.

15. Verfahren nach einem der Ansprüche 11-14, das ferner einschließt:
Befestigen eines dritten Substrats (12C) an dem zweiten Substrat (12B) durch zusätzlichen Klebstoff (16B), wobei das dritte Substrat (12C) eine dritte Metaoberfläche (14C) darauf aufweist, wobei die erste (14A), die zweite (14B) und die dritte (14C) Metaoberfläche übereinander gestapelt sind, wobei gegebenenfalls das dritte Substrat so an dem zweiten Substrat befestigt ist, so dass die dritte Metaoberfläche dem zweiten Substrat zugewandt ist, wobei sich nur der zusätzliche Klebstoff dazwischen befindet.

## Revendications

1. Appareil comprenant :
un agencement de lentille comportant un premier substrat (12A) portant une première métasurface (14A), et un deuxième substrat (12B) portant une deuxième métasurface (14B),
les première et deuxième métasurfaces (14A, 14B) étant empilées et se faisant face, les première et deuxième métasurfaces (14A, 14B) étant séparées l'une de l'autre par un adhésif (16A) qui fixe les premier et deuxième substrats (12A, 12B) l'un à l'autre,
**caractérisé en ce que**
une épaisseur totale combinée de l'agencement de lentille comportant les premier et deuxième substrats (12A, 12B), les première et deuxième métasurfaces (14A, 14B) et l'adhésif (16A) est de 10 µm ou moins.

2. Appareil de la revendication 1 dans lequel les premier et deuxième substrats sont composés d'un matériau en verre, et dans lequel l'adhésif est une colle polymère.

3. Appareil de l'une quelconque des revendications 1 et 2 dans lequel l'adhésif est optiquement transparent au rayonnement infrarouge.

4. Appareil de l'une quelconque des revendications 1 à 3 dans lequel les premier et deuxième substrats sont composés d'un verre de borosilicate.

5. Appareil de l'une quelconque des revendications 1 à 4 dans lequel la première métasurface fait face à la deuxième métasurface, avec seulement l'adhésif entre elles, et dans lequel il n'y a pas de lame d'air présente entre la première et la deuxième métasurface.

6. Appareil de l'une quelconque des revendications 1 à 5 dans lequel l'agencement de lentille comporte en outre un troisième substrat (12C) portant une troisième métasurface (14C), le troisième substrat (12C) étant fixé par un adhésif supplémentaire (16B) au deuxième substrat.

7. Appareil de la revendication 6 dans lequel la troisième métasurface fait face au deuxième substrat avec seulement l'adhésif supplémentaire entre eux.

8. Appareil de l'une quelconque des revendications 1 à 7 comportant au moins une ouverture optique sur une des métasurfaces ou sur un des substrats.

9. Appareil de l'une quelconque des revendications 1 à 8 dans lequel la précision d'alignement latéral entre la première et la deuxième métasurface est meilleure que 50 µm.

10. Appareil de l'une quelconque des revendications 1 à 8 dans lequel la précision d'alignement latéral entre la première et la deuxième métasurface est meilleure que 5 µm.

11. Procédé comprenant :
l'application d'un adhésif (16A) sur une surface d'un premier substrat (12A) portant une première métasurface (14A) ;
la fixation du premier substrat (12A) à un deuxième substrat (12B) portant une deuxième métasurface (14B) de telle sorte que les première et deuxième métasurfaces (14A, 14B) soient empilées et se fassent face, les premier et deuxième substrats (12A, 12B) étant fixés l'un à l'autre par l'adhésif (16A), et les première et deuxième métasurfaces (14A, 14B) étant séparées l'une de l'autre par l'adhésif (16A) ;
**caractérisé par**
l'amincissement d'au moins un des premier et deuxième substrats (12A, 12B) jusqu'à ce qu'une épaisseur totale combinée des premier et deuxième substrats (12A, 12B), des première et deuxième métasurfaces (14A, 14B) et de l'adhésif (16A) soit de 10 µm ou moins.

12. Procédé de la revendication 11 dans lequel les premier et deuxième substrats sont composés d'un matériau en verre et l'adhésif est une colle polymère, dans lequel, après la fixation des premier et deuxième substrats l'un à l'autre, la première métasurface fait face à la deuxième métasurface avec seulement l'adhésif entre elles, et dans lequel il n'y a pas de lame d'air présente entre la première et la deuxième métasurface.

13. Procédé de l'une quelconque des revendications 11 et 12 comportant en outre :
le retrait complet d'au moins un des premier et deuxième substrats.

14. Procédé de la revendication 13 dans lequel l'amincissement ou le retrait complet comprend une gravure.

15. Procédé de l'une quelconque des revendications 11 à 14 comportant en outre :
la fixation d'un troisième substrat (12C) au deuxième substrat (12B) avec un adhésif supplémentaire (16B), le troisième substrat (12C) portant une troisième métasurface (14C), les première (14A), deuxième (14B) et troisième (14C) métasurfaces étant empilées les unes sur les autres, le troisième substrat étant éventuellement fixé au deuxième substrat de telle sorte que la troisième métasurface fasse face au deuxième substrat avec seulement l'adhésif supplémentaire entre eux.
